# EUROPÄISCHE PATENTSCHRIFT

(11) **EP 2 594 330 B1**
(45) Veröffentlichungstag und Bekanntmachung des Hinweises auf die Patenterteilung: **16.07.2014**
(21) Anmeldenummer: 12184846.9
(22) Anmeldetag: 18.09.2012
(51) Int. Cl.: B01F 3/04, B01F 5/04, B01F 5/06, F01N 3/28

(54) **Misch- und/oder Verdampfungseinrichtung**
Mixing and/or vaporisation device
Dispositif de mélange et/ou d'évaporation

(30) Priorität: 28.09.2011 DE 102011083636
(43) Veröffentlichungstag der Anmeldung: 22.05.2013
(73) Patentinhaber: Eberspächer Exhaust Technology GmbH & Co. KG, 66539 Neunkirchen (DE)
(72) Erfinder: Leicht, Sebastian, 72406 Bisingen (DE); Neumann, Felix, 73732 Esslingen (DE); Arlt, Benjamin, 73773 Aichwald (DE); Semenov, Oleksandr, 73207 Plochingen (DE); Calvo, Silvia, 73730 Esslingen (DE); Braun, Joachim, 73732 Esslingen (DE); Wolf, Tobias, 73257 Köngen (DE)
(74) Vertreter: BRP Renaud & Partner

(56) Entgegenhaltungen:
- EP-A1- 0 430 973
- EP-A1- 0 894 523
- DE-A1-102007 040 360
- DE-A1-102009 054 356

## Beschreibung

Die vorliegende Erfindung betrifft eine Misch- und/oder Verdampfungseinrichtung für eine Abgasanlage einer Brennkraftmaschine, insbesondere eines Kraftfahrzeugs. Die Erfindung betrifft außerdem eine mit einer derartigen Einrichtung ausgestattete Abgasanlage sowie einen mit einer derartigen Einrichtung ausgestatteten SCR-Katalysator.

Üblicherweise ist eine Abgasanlage einer Brennkraftmaschine mit Einrichtungen zum Reinigen bzw. Nachbehandeln der von der Brennkraftmaschine weggeführten Abgase ausgestattet. Dabei kann es erforderlich sein, ein flüssiges Edukt in den Abgasstrom einzubringen, darin zu verdampfen und mit dem Abgas zu vermischen. Beispielsweise kann es erforderlich sein, stromauf eines Oxidationskatalysators einen Kraftstoff dem Abgas zuzumischen, um durch eine exotherme Umsetzung des Kraftstoffs im Oxidationskatalysator eine Aufheizung des Abgasstroms zu bewirken. Der aufgeheizte Abgasstrom kann dann stromab des Oxidationskatalysators dazu genutzt werden, eine weitere Abgasnachbehandlungseinrichtung auf Betriebstemperatur bzw. auf Regenerationstemperatur aufzuheizen, beispielsweise einen anderen Katalysator oder ein Partikelfilter. Ferner sind SCR-Systeme bekannt, die mit selektiver katalytischer Reaktion arbeiten und mit einem SCR-Katalysator ausgestattet sind, der NO_{X} aus dem Abgasstrom aufnimmt. Stromauf des SCR-Katalysators wird dem Abgasstrom ein geeignetes Reduktionsmittel zugeführt, beispielsweise Ammoniak bzw. Harnstoff, vorzugsweise eine wässrige Harnstofflösung. Im SCR-Katalysator bewirkt das Ammoniak dann eine Umwandlung der eingelagerten Stickoxide in Stickstoff und Wasser.

Für alle in flüssiger Form dem Abgasstrom zugeführten Edukte gilt, dass der gewünschte Effekt nur dann zufriedenstellend erreichbar ist, wenn zwischen der Einleitstelle des flüssigen Edukts und einem Verbrauchsort des Edukts eine hinreichende Verdampfung des Edukts sowie eine hinreichende Durchmischung des gasförmigen Edukts mit dem Abgasstrom erfolgen kann. Zu diesem Zweck kommen die eingangs genannten Misch- und/oder Verdampfungseinrichtungen zum Einsatz, die im Strömungspfad des Abgases zwischen der Einleitstelle des Edukts und der Verbrauchsstelle des Edukts angeordnet werden.

Die vorliegende Erfindung beschäftigt sich mit dem Problem, für eine Einrichtung der eingangs genannten Art bzw. für einen damit ausgestatteten SCR-Katalysator bzw. für eine damit ausgestattete Abgasanlage eine verbesserte oder zumindest eine andere Ausführungsform anzugeben, die sich durch einen einfachen und somit preiswerten Aufbau auszeichnet, wobei außerdem ein geringer Durchströmungswiderstand angestrebt ist. Ferner ist eine verbesserte Strömungsverteilung über den Querschitt angestrebt, was vorteilhaft zu einer Reduzierung des Gegendrucks führt.

EP-A- 0 894 523 offenbart eine Misch -und/oder Verdampfungseinrichtung gemäß dem Oberbegriff des Anspruchs 1.

Dieses Problem wird bei der vorliegenden Erfindung durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Misch- und/oder Verdampfungseinrichtung mit einem Tragkörper auszustatten, der einen quer zur Axialrichtung der Einrichtung verlaufenden, flachen, durchströmbaren Querschnitt der Einrichtung in der Umfangsrichtung umschließt. Der Tragkörper definiert somit keinen kreisförmigen Querschnitt, sondern einen länglichen bzw. flachen Querschnitt, derart, dass der Tragkörper zwei einander gegenüberliegende lange Seitenwände und zwei einander gegenüberliegende kurze Seitenwände aufweist, wobei die kurzen Seitenwände jeweils die beiden langen Seitenwände miteinander verbinden. Durch die erfindungsgemäß vorgeschlagene Ausgestaltung des Tragkörpers mit einem flachen Querschnitt ist es möglich, zumindest an einer langen Seitenwand wenigstens an einem axialen Ende der Seitenwand bzw. des Tragkörpers mehrere Leitschaufeln anzuordnen, die in Richtung zur anderen langen Seitenwand abstehen und die gegenüber der Axialrichtung unter einem Anstellwinkel angestellt sind. Durch diese Bauweise erstrecken sich die Leitschaufeln quer zur Axialrichtung und sind außerdem sowohl quer zur Axialrichtung als auch quer zu ihrer Längsrichtung nebeneinander angeordnet. Die Axialrichtung der Einrichtung entspricht dabei einer Hauptströmungsrichtung des Abgases durch die Einrichtung. Diese Hauptströmungsrichtung berücksichtigt dabei Strömungsablenkungen, Querströmungen, Rückströmungen, Verwirbelungen und dergleichen innerhalb des durchströmbaren Querschnitts nicht.

Am jeweiligen axialen Ende der jeweiligen langen Seitenwand wird somit eine Reihe nebeneinander angeordneter, insbesondere parallel zueinander verlaufender Leitschaufeln bereitgestellt, die jeweils eine Strömungsablenkung in Richtung einer kurzen Seitenwand bewirken. Zum einen bieten die Leitschaufeln der jeweiligen geradlinigen Leitschaufelreihe eine vergleichsweise große Auftrefffläche für stromauf davon in den Abgasstrom eingebrachtes flüssiges Edukt, so dass die Flüssigkeit auf den Leitschaufeln auftreffen und daran verdampfen kann. Zum anderen bewirken die Leitschaufeln eine intensive Strömungsumlenkung, was die Durchmischung des verdampften Edukts mit dem Abgasstrom fördert.

Vorzugsweise können die Leitschaufeln dabei von der jeweiligen Seitenwand im Wesentlichen senkrecht abstehen, also mit einem Winkel von 90° ± 10°. Dadurch verbleiben die Leitschaufeln insbesondere innerhalb einer durch den Tragkörper gebildeten Einfassung.

Vorteilhaft kann der Tragkörper aus einem flachen Bahnmaterial durch Umformung hergestellt sein, das sich mit seiner Längsrichtung in der Umfangsrichtung erstreckt und die Seitenwände bildet und mit seiner Querrichtung parallel zur Axialrichtung verläuft. Im Einbauzustand der Einrichtung kann sich der Tragkörper so mit seiner radial außen liegenden Außenseite an eine dem jeweiligen Gaspfad zugewandte Innenseite einer das Gas führenden Leitung flächig anlegen.

Besonders zweckmäßig können die Leitschaufeln integral am Bahnmaterial ausgeformt und davon abgewinkelt sein, wodurch sich eine preiswerte Realisierbarkeit für die Einrichtung ergibt.
Ein derartiger "flacher" durchströmbarer Querschnitt charakterisiert sich dadurch, dass er in einer ersten senkrecht zur Axialrichtung verlaufenden Richtung einen Durchmesser aufweist, der größer ist als ein Durchmesser in einer senkrecht zur Axialrichtung und senkrecht zur ersten Richtung verlaufenden zweiten Richtung. Insbesondere kann der Durchmesser in der einen Richtung mindestens doppelt so groß sein wie in der anderen Richtung. Die beiden Durchmesser schneiden sich dabei in einem Mittelpunkt des Querschnitts. Ausgeschlossen von den flachen Querschnitten sind dadurch kreisförmige Querschnitte, während ovale und elliptische Querschnitte ebenfalls flach sind oder sein können. Die Begriffe "lang" und "kurz" sind hier nicht absolut, sondern relativ zueinander zu verstehen, so dass die langen Seitenwände in der Umfangsrichtung länger sind als die kurzen Seitenwände. Je nach Geometrie des durchströmbaren Querschnitts der Einrichtung sind die langen Seitenwände zweckmäßig eben, während die kurzen Seitenwände gekrümmt sein können.

Entsprechend einer besonders vorteilhaften Ausführungsform sind die Leitschaufeln innerhalb der jeweiligen Leitschaufelreihe so angeordnet, insbesondere so angestellt, dass die jeweilige Leitschaufelreihe vom Abgas drallfrei durchströmbar ist. Das bedeutet, dass die Abgasströmung bei der Durchströmung einer derartigen Leitschaufelreihe keine Drallbeaufschlagung erfährt, sondern nur eine seitliche Ablenkung durch die jeweilige Leitschaufel. Sofern mehrere Leitschaufelreihen vorgesehen sind, ist zweckmäßig jede Leitschaufelreihe so konzipiert, dass sie vom Abgasstrom drallfrei durchströmbar ist.

Die einzelnen Leitschaufeln können eben konfiguriert sein. Ebene Leitschaufeln besitzen entlang ihrer Längsrichtung stets denselben Anstellwinkel gegenüber der Abgasströmung bzw. gegenüber der Axialrichtung. Ebenso ist es grundsätzlich möglich, zumindest eine oder alle Leitschaufeln mit einer Verwindung zu versehen, so dass sich ihr Anstellwinkel entlang der Längsrichtung der Leitschaufel verändert.

Entsprechend einer vorteilhaften Ausführungsform können die Leitschaufeln an der jeweiligen Seitenwand an einer Anströmseite oder an einer Abströmseite oder sowohl an der Abströmseite als auch an der Abströmseite angeordnet sein. Dementsprechend kann an der jeweiligen langen Seitenwand eine anströmseitige Leitschaufelreihe oder eine abströmseitige Leitschaufelreihe ausgebildet sein. Ebenso können an der jeweiligen langen Seitenwand zwei Leitschaufelreihen ausgebildet sein, nämlich jeweils eine an den beiden axialen Enden der jeweiligen langen Seitenwand.

Bei einer anderen vorteilhaften Ausführungsform können die Leitschaufeln an beiden langen Seitenwänden jeweils an wenigstens einem axialen Ende angeordnet sein. Das bedeutet, dass anströmseitig oder abströmseitig oder sowohl anströmseitig als auch abströmseitig von beiden langen Seitenwänden Leitschaufeln in Richtung der gegenüberliegenden anderen langen Seitenwand abstehen. Beispielsweise kann dadurch am jeweiligen axialen Ende eine gemeinsame Leitschaufelreihe gebildet werden, in der sich die Leitschaufeln der beiden langen Seitenwände abwechseln. Mit anderen Worten, in diesem Fall sind die Leitschaufeln der beiden langen Seitenwände in der Längsrichtung der jeweiligen Leitschaufelreihe seitlich nebeneinander angeordnet.

Alternativ können sich die Leitschaufeln der jeweiligen langen Seitenwand jeweils bis zu einer Längsmittelebene erstrecken, die mittig zwischen den langen Seitenwänden verläuft. Auf diese Weise bilden die Leitschaufeln der beiden langen Seitenwände beiderseits der Längsmittelebene jeweils eine separate Leitschaufelreihe, so dass am jeweiligen axialen Ende zwei parallel verlaufende Leitschaufelreihen vorgesehen sind.

Entsprechend einer besonders vorteilhaften Ausführungsform können die Leitschaufeln jeweils freistehend enden. Das bedeutet, dass die jeweilige Leitschaufel distal zur zugehörigen langen Seitenwand, von der sie ausgeht, ein freistehendes Ende besitzt. Somit sind die Leitschaufeln ohne Kontakt, also kontaktfrei zur gegenüberliegenden langen Seitenwand sowie kontaktfrei zu den anderen Leitschaufeln derselben langen Seitenwand oder der gegenüberliegenden langen Seitenwand.

Innerhalb der jeweiligen Leitschaufelreihe können die zugehörigen Leitschaufeln zweckmäßig jeweils den gleichen Anstellwinkel gegenüber der Axialrichtung besitzen. In Leitschaufelreihen, die an verschiedenen axialen Enden angeordnet sind und die an derselben langen Seitenwand oder an gegenüberliegenden langen Seitenwänden angeordnet sind, können die Leitschaufeln entgegengesetzte Anstellwinkel zur Axialrichtung besitzen. Führt beispielsweise die zuerst durchströmte Leitschaufelreihe an den zugehörigen Leitschaufeln einheitlich zu einer Strömungsablenkung in der einen Richtung, führt die Durchströmung der anschließend durchströmten Leitschaufelreihe an den einzelnen Leitschaufeln einheitlich zu einer Ablenkung der Abgasströmung in der anderen Richtung, also in die Gegenrichtung. Hierdurch ergibt sich eine intensive Durchmischung des verdampften Edukts und der Abgasströmung.

Ferner ist es grundsätzlich möglich, bei Leitschaufelreihen, die am selben axialen Ende, jedoch an gegenüberliegenden langen Seitenwänden angeordnet sind, die Leitschaufeln entgegengesetzt gegenüber der Axialrichtung anzustellen, wodurch ebenso eine intensive Durchmischung realisierbar ist.

Gemäß weist Anspruch 1 zumindest zwei Leitschaufeln auf, die an derselben langen Seitenwand und an demselben axialen Ende angeordnet sind, unterschiedliche Schaufellängen, mit der sie von der jeweiligen langen Seitenwand abstehen, und/oder unterschiedliche Schaufelbreiten, die quer zur Schaufellängsrichtung gemessen ist. Mit anderen Worten, innerhalb der jeweiligen Leitschaufelreihe können die einzelnen Leitschaufeln unterschiedlich lang und/oder breit sein. Hierdurch ist es zum einen möglich, die lange Seitenwand mit einer gekrümmten Kontur bzw. mit einem gekrümmten Verlauf quer zur Axialrichtung auszustatten. Zum anderen lässt sich durch die Variation der Leitschaufellängen und/oder -breiten ein gewünschter niedriger Durchströmungswiderstand innerhalb der Einrichtung einstellen.

Gemäß Anspruch 1 sind zumindest zwei Leitschaufeln, die an derselben langen Seitenwand und an demselben axialen Ende angeordnet sind, verschieden oder entgegengesetzt zur Axialrichtung angestellt. In diesem Fall sind somit die Leitschaufeln innerhalb der jeweiligen Leitschaufelreihe nicht gleich, sondern unterschiedlich gegenüber der Axialrichtung angestellt. Durch diese Maßnahme kann beispielsweise eine am Ort der Einrichtung im Querschnitt des Abgaspfads herrschende inhomogene Geschwindigkeitsverteilung bzw. Massenstromverteilung entsprechend berücksichtigt werden, um insgesamt eine Homogenisierung der Abgasströmung bei vergleichsweise niedrigem Durchströmungswiderstand erzielen zu können. Beispielsweise ist denkbar, dass die Einrichtung im Abgaspfad an einer Stelle positioniert wird, in welcher der Abgaspfad keinen geraden, sondern einen gekrümmten Verlauf besitzt, so dass der Abgasstrom eine Kurve bzw. einen Bogen durchströmt. Radial außen herrschen dann höhere Strömungsgeschwindigkeiten als radial innen.

Bei einer weiteren vorteilhaften Ausführungsform können entlang der jeweiligen langen Seitenwand an dem jeweiligen axialen Ende quer zur Axialrichtung mehrere Leitschaufelplätze regelmäßig nebeneinander angeordnet sein, wobei die Anzahl der Leitschaufeln, die jeweils in einem solchen Leitschaufelplatz angeordnet sind, kleiner ist als die Anzahl der Leitschaufelplätze, so dass zumindest in einem solchen Leitschaufelplatz eine Lücke angeordnet ist. Mit anderen Worten, die Leitschaufelplätze definieren innerhalb der jeweiligen Leitschaufelreihe Positionen für die Anordnung von Leitschaufeln, wobei die Leitschaufelplätze eine regelmäßige, gleichmäßige Aneinanderreihung von Leitschaufeln ermöglichen. Durch die Weglassung wenigstens einer Leitschaufel entsteht dann im jeweiligen Leitschaufelplatz eine Lücke. Am Ort der Lücke reduziert sich der Durchströmungswiderstand, wodurch insgesamt eine Anpassung des Durchströmungswiderstands der Einrichtung an die örtlichen Gegebenheiten möglich ist. Alternativ zu einer derartigen regelmäßigen Anordnung von Leitschaufeln und Lücken mittels vorgegebener Leitschaufelplätze ist es grundsätzlich ebenso möglich, innerhalb der jeweiligen Leitschaufelreihe die Positionen der benachbarten Leitschaufeln hinsichtlich ihres Abstands zueinander frei zu wählen, so dass die Leitschaufeln variierende Abstände zueinander aufweisen können.

Bei einer anderen vorteilhaften Ausführungsform können alle Leitschaufeln integral an der jeweiligen langen Seitenwand ausgeformt sein, wodurch die Einrichtung besonders einfach und somit preiswert hergestellt werden kann. Besonders vorteilhaft ist dabei eine Ausführungsform, bei welcher alle Seitenwände integral am Tragkörper ausgeformt sind, was ebenfalls zu einer einfachen und somit preiswerten Bauform führt. Insbesondere kann es sich bei der Einrichtung um ein Blechformteil aus einem Bahnmaterial handeln, das einfach durch Stanzen und Umformen aus einem einzigen Blechkörper bzw. Bahnmaterialkörper hergestellt werden kann. Vorzugsweise sind die Komponenten der Einrichtung aus Metall hergestellt. Sofern als Ausgangsmaterial ein langer Blechstreifen verwendet wird, von dem zunächst die Leitschaufeln freigeschnitten und abgewinkelt werden und der anschließend zur Ausbildung des Tragkörpers mit den langen und den kurzen Seitenwänden umgebogen wird, kann der Tragkörper in der Umfangsrichtung geschlossen werden, indem im Bereich einer der kurzen Seitenwände die Längsenden des ursprünglichen Blechstreifens miteinander verbunden werden, entweder als Stoß oder mit Überlappung.

Eine erfindungsgemäße Abgasanlage umfasst zumindest einen SCR-Katalysator, eine Reduktionsmittelzuführeinrichtung, die zumindest einen Injektor zum Zuführen eines Reduktionsmittels zum Abgasstrom stromauf des SCR-Katalysators aufweist, und wenigstens eine Misch- und/oder Verdampfungseinrichtung der vorbeschriebenen Art, die zwischen dem wenigstens einen Injektor und dem wenigstens einen SCR-Katalysator angeordnet ist.

Ein erfindungsgemäßer SCR-Katalysator umfasst dagegen ein Gehäuse, in dem zumindest ein SCR-Katalysatorelement angeordnet ist, sowie wenigstens eine Misch- und/oder Verdampfungseinrichtung der vorbeschriebenen Art, die im Gehäuse des SCR-Katalysators stromauf des wenigstens einen SCR-Elements angeordnet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung einer Brennkraftmaschine mit einer Abgasanlage,
- Fig. 2: eine stark vereinfachte, schaltplanartige Ansicht eines SCR-Katalysators,
- Fig. 3: jeweils einen Querschnitt des SCR-Katalysators entsprechend Schnittlinien III in Figur 2, bei verschiedenen Ausführungsformen A und B,
- Fig. 4-13: jeweils eine isometrische Ansicht einer Misch- und/oder Verdampfungseinrichtung bei verschiedenen Ausführungsformen.

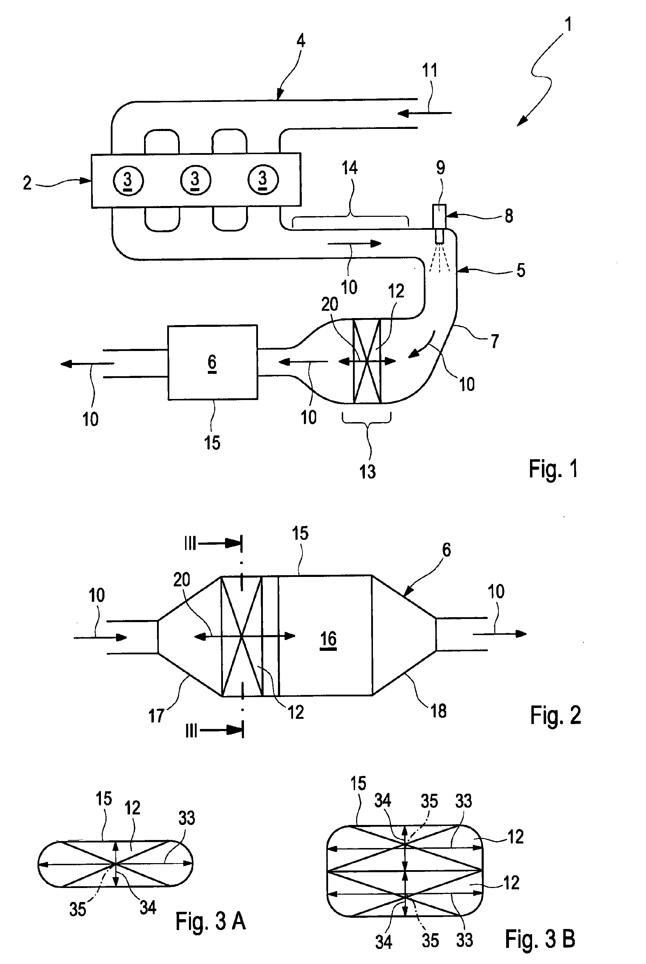

Entsprechend Figur 1 umfasst eine Brennkraftmaschine 1 in üblicher Weise einen Motorblock 2, der mehrere Zylinder 3 aufweist. Eine Frischluftanlage 4 versorgt die Zylinder 3 des Motorblocks 2 mit Frischluft. Ein entsprechender Frischluftstrom ist dabei durch einen Pfeil 11 angedeutet. Eine Abgasanlage 5 führt im Betrieb der Brennkraftmaschine 1 Verbrennungsabgase von den Zylindern 3 des Motorblocks 2 ab. Ferner bewirkt die Abgasanlage 5 eine Abgasreinigung bzw. Abgasnachbehandlung. Hierzu ist die Abgasanlage 5 mit wenigstens einem SCR-Katalysator 6 ausgestattet, der auf geeignete Weise in einen Abgasstrang 7 der Abgasanlage 5 eingebunden ist. Ferner umfasst die Abgasanlage 5 eine Reduktionsmittelzuführeinrichtung 8, die zumindest einen Injektor 9 aufweist, mit dessen Hilfe ein Reduktionsmittel in einen Abgasstrom 10 eingebracht werden kann, der im Betrieb der Brennkraftmaschine 1 im Abgasstrang 7 strömt und durch Pfeile angedeutet ist. Die Eindüsung des flüssigen Reduktionsmittels in den Abgasstrom 10 erfolgt dabei stromauf des SCR-Katalysators 6.

Ferner umfasst die Abgasanlage 5 zumindest eine Misch- und/oder Verdampfungseinrichtung 12, die im Folgenden verkürzt mit Einrichtung 12 bezeichnet wird. Die Einrichtung 12 ist dabei im Abgasstrang 7 zwischen dem Injektor 9 und dem SCR-Katalysator 6 angeordnet, so dass das Abgas mit dem zugeführten Reduktionsmittel zuerst die Einrichtung 12 durchströmen muss, bevor das Gemisch zum SCR-Katalysator 6 gelangt.

Der Abgasstrang 7 kann in einen Bereich 13, in dem die Einrichtung 12 angeordnet ist, einen flachen Durchströmungsquerschnitt aufweisen, während beispielsweise in einem Bereich 14, der sich stromauf des Injektors 9 befindet, ein kreisförmiger Querschnitt vorliegen kann. Dabei können in den Abschnitten 13, 14 die Querschnittsflächen gleich groß sein oder unterschiedlich groß sein.

Bei der in Figur 1 gezeigten Ausführungsform ist die Einrichtung 12 stromauf des SCR-Katalysators 6 im Abgasstrang 7 angeordnet und somit separat vom SCR-Katalysator 6 vorgesehen. Insbesondere befindet sich hier die Einrichtung 12 außerhalb eines Gehäuses 15 des SCR-Katalysators 6.

Im Unterschied dazu zeigt Figur 2 eine Ausführungsform, bei welcher der SCR-Katalysator 6 und die Einrichtung 12 eine integrale Einheit bilden. Hierzu ist im Gehäuse 15 des SCR-Katalysators 6 zumindest ein SCR-Katalysatorelement 16 angeordnet, wobei im Gehäuse 15 stromauf dieses SCR-Katalysatorelements 16 außerdem die Einrichtung 12 angeordnet ist. Somit sind die Einrichtung 12 und das SCR-Katalysatorelement 16 in einem gemeinsamen Gehäuse 15 angeordnet. Im Beispiel der Figur 2 umfasst das Gehäuse 15 einen Einlasstrichter 17 und einen Auslasstrichter 18, wobei die Einrichtung 12 und das SCR-Katalysatorelement 16 zwischen den beiden Trichtern 17, 18 angeordnet sind.

Gemäß den Figuren 3A und 3B kann das Gehäuse 15 zumindest im Bereich der Einrichtung 12 einen flachen Querschnitt besitzen, an den die jeweilige Einrichtung 12 angepasst ist. Figur 3A zeigt dabei eine Ausführungsform, bei welcher der durchströmbare Querschnitt des Gehäuses 15 mit Hilfe einer einzigen Einrichtung 12 ausgefüllt ist. Im Unterschied dazu zeigt Figur 3B eine Ausführungsform, bei welcher der durchströmbare Querschnitt des Gehäuses 15 mit Hilfe von zwei nebeneinander angeordneten Einrichtungen 12 ausgefüllt ist. Entsprechendes gilt dann auch für die Anordnung der Einrichtung 12 im Abgasstrang 7, so dass auch dort zumindest zwei Einrichtungen 12 nebeneinander im Bereich 13 angeordnet sein können, um den durchströmbaren Querschnitt des Abgasstrangs 7 auszufüllen. Ein derartiger "flacher" durchströmbarer Querschnitt charakterisiert sich dadurch, dass er in einer ersten senkrecht zu einer in den Fig. 3A und 3B senkrecht zur Zeichnungsebene verlaufenden Axialrichtung der Einrichtung 12 verlaufenden Richtung einen ersten Durchmesser 33 aufweist, der größer ist als ein zweiter Durchmesser 34 in einer senkrecht zur Axialrichtung und senkrecht zur ersten Richtung verlaufenden zweiten Richtung. Insbesondere kann der erste Durchmesser 33 in der einen Richtung mindestens doppelt so groß sein wie der zweite Durchmesser 34 in der anderen Richtung. Die beiden Durchmesser 33, 34 schneiden sich dabei in einem Mittelpunkt 35 des jeweiligen Querschnitts.

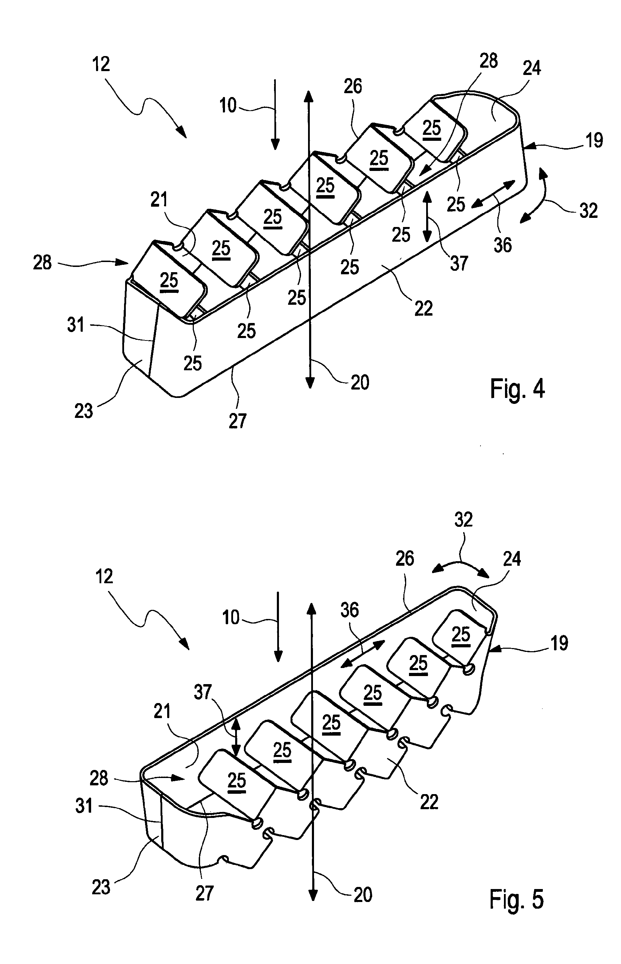

Entsprechend den Figuren 4-13 umfasst die jeweilige Einrichtung 12 einen Tragkörper 19. Der Tragkörper 19 ist so geformt, dass er quer zu einer Axialrichtung 20, die in den Figuren 1, 2 und 4-13 durch einen Doppelpfeil angedeutet ist, einen flachen durchströmbaren Querschnitt der Einrichtung 12 in einer Umfangsrichtung 32 umschließt. Die Axialrichtung 20 entspricht dabei einer Hauptdurchströmungsrichtung der Einrichtung 12 im Betrieb der Abgasanlage 5. Da der durchströmbare Querschnitt der Einrichtung 12 flach ist, besitzt der Tragkörper 19 zwei lange Seitenwände 21, 22, die einander gegenüberliegen, sowie zwei kurze Seitenwände 23, 24, die ebenfalls einander gegenüberliegen. Die kurzen Seitenwände 23, 24 verbinden dabei jeweils die beiden langen Seitenwände 21, 22.

Des Weiteren ist die Einrichtung 12 mit mehreren Leitschaufeln 25 ausgestattet, die dabei jeweils von einer der langen Seitenwänden 21, 22 in Richtung zur anderen langen Seitenwand 21, 22 abstehen und dabei an einem axialen Ende 26 oder 27 der Einrichtung 12 bzw. des Tragkörpers 19 bzw. der jeweiligen langen Seitenwand 21, 22 abstehen. Sofern die Abgasströmung entsprechend dem Pfeil 10 orientiert ist, bildet das eine, zuerst angeströmte axiale Ende 26 eine Anströmseite, die im Folgenden ebenfalls mit 26 bezeichnet wird, während das andere axiale Ende 27 dann eine Abströmseite bildet, die im Folgenden ebenfalls mit 27 bezeichnet wird.

Die Leitschaufeln 25 erstrecken sich jeweils geradlinig sowie parallel zueinander. Ferner sind die Leitschaufeln 25 bei den hier gezeigten Ausführungsformen jeweils eben ausgestaltet. Außerdem sind sie gegenüber der Axialrichtung 20 angestellt. Bei den gezeigten Beispielen beträgt ein Anstellwinkel der Leitschaufeln 25 gegenüber der Axialrichtung 20 jeweils 45° im Rahmen üblicher Herstellungstoleranzen.

Die Leitschaufeln 25 erstrecken sich quer zur Axialrichtung 20 und sind außerdem quer zu ihrer Längserstreckung und quer zur Axialrichtung 20 nebeneinander in einer Reihe angeordnet, die auch als Schaufelreihe 28 bezeichnet werden kann.

Figur 4 zeigt eine Ausführungsform, bei welcher ausschließlich an der einen langen Seitenwand 21 Leitschaufeln 25 angeordnet sind, wobei an dieser Seitenwand 21 sowohl an der Anströmseite 26 als auch an der Abströmseite 27 Leitschaufeln 25 angeordnet sind, die in Richtung zur anderen Seitenwand 22 abstehen. Dementsprechend sind hier zwei Leitschaufelreihen 28 vorgesehen, nämlich eine anströmseitige Schaufelreihe 28 und eine abströmseitige Schaufelreihe 28.

Im Unterschied dazu zeigt Figur 5 eine Ausführungsform, bei welcher nur eine einzige Schaufelreihe 28 vorgesehen ist, deren Leitschaufeln 25 an der einen langen Seitenwand 22 anströmseitig angeordnet sind und sich zur anderen langen Seitenwand 21 erstreckt.

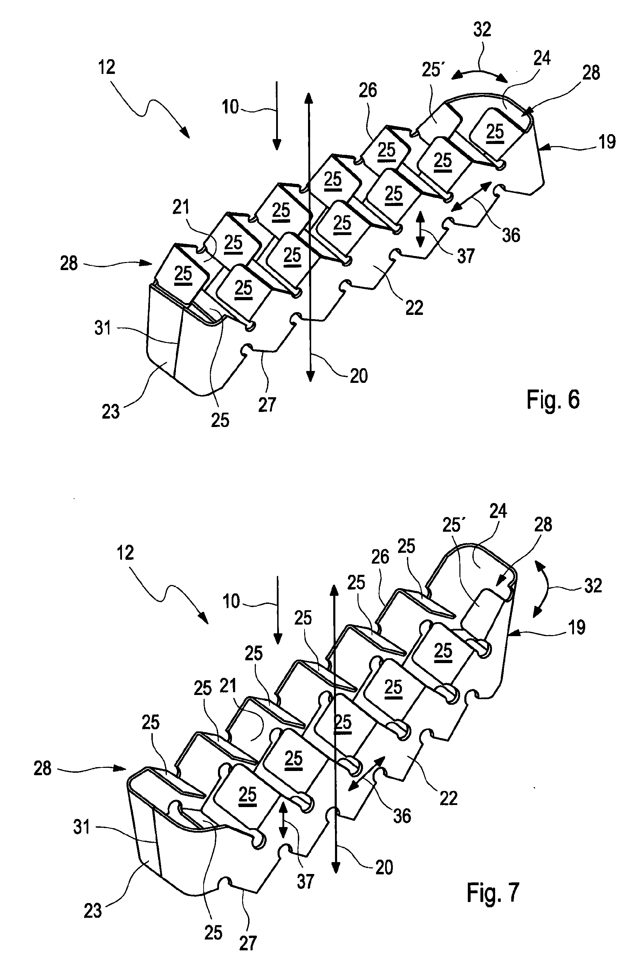

Bei den Ausführungsformen der Figuren 6-13 ist dagegen vorgesehen, dass an beiden langen Seitenwänden 21, 22 zumindest an einem axialen Ende 26, 27 jeweils Leitschaufeln 25 angeordnet sind, die in Richtung zur anderen langen Seitenwand 21, 22 abstehen. Bei den hier gezeigten Ausführungsformen sind dadurch am jeweiligen axialen Ende 26, 27, also an der Anströmseite 26 bzw. an der Abströmseite 27 jeweils zwei nebeneinander angeordnete, parallel zueinander verlaufende Schaufelreihen 28 vorgesehen. Beispielhaft sind hier die sich gegenüberliegenden Leitschaufeln 25 so dimensioniert, dass sie sich ausgehend von der zugehörigen langen Seitenwand 21, 22 bis zu einer Längsmittelebene erstrecken, die mittig zwischen den beiden langen Seitenwänden 21, 22 verläuft. Alternativ können sich die Leitschaufeln 25 der beiden langen Seitenwände 21, 22 soweit in Richtung der anderen Seitenwand 21, 22 erstrecken, dass sich die Leitschaufeln 25 der einen langen Seitenwand 21 bis in die Lücken zwischen benachbarten Leitschaufeln 25 der anderen Seitenwand 22 hineinerstrecken, so dass letztlich eine gemeinsame Leitschaufelreihe 28 gebildet wird, die durch die Leitschaufeln 25 der beiden langen Seitenwänden 21, 22 gebildet wird, wobei sich innerhalb dieser gemeinsamen Leitschaufelreihe 28 die Leitschaufeln 25 der beiden langen Seitenwände 21, 22 abwechseln.

Bei den hier gezeigten Ausführungsformen sind die Leitschaufeln 25 jeweils so angeordnet und dimensioniert, dass sie beabstandet zu der jeweiligen langen Seitenwand 21, 22, von der sie ausgehen, freistehend enden. So sind die Leitschaufeln 25 der Ausführungsformen der Figuren 4 und 5 insbesondere kontaktfrei zur jeweils gegenüberliegenden langen Seitenwand 21, 22. Die Leitschaufeln 25 der Ausführungsformen der Figuren 6-13 sind insbesondere kontaktfrei zu den anderen Leitschaufeln 25.

Sofern wie in den Ausführungsformen der Figuren 4, 6, 8, 10, 12 erkennbar an beiden axialen Enden 26, 27 Leitschaufeln 25 vorgesehen sind, können diese zweckmäßig entgegengesetzt zur Axialrichtung 20 angestellt sein. Das bedeutet, dass die Leitschaufeln 25 einer anströmseitigen Schaufelreihe 28 in der einen Richtung gegenüber der Axialrichtung 20 angestellt sind, während die Leitschaufeln 25 einer abströmseitigen Schaufelreihe 28 dann in der anderen Richtung, also in der Gegenrichtung zur Axialrichtung 20 angestellt sind.

Die Figuren 6, 8, 10, 12 zeigen Ausführungsformen, bei denen die Leitschaufeln 25, die am selben axialen Ende 26, 27, jedoch an verschiedenen langen Seitenwänden 21, 22, also in zwei Schaufelreihen 28 angeordnet sind, jeweils mit dem gleichen Winkel gegenüber der Axialrichtung 20 angestellt sind. Im Unterschied dazu zeigen die Figuren 7, 9, 11, 13 Ausführungsformen, bei denen die Leitschaufeln 25, die am selben axialen Ende 26, 27, jedoch an gegenüberliegenden langen Seitenwänden 21, 22 angeordnet sind, entgegengesetzt zur Axialrichtung 20 angestellt sind. Mit anderen Worten, an der Anströmseite 26 und/oder an der Abströmseite 27 sind die Leitschaufeln 25 der einen Schaufelreihe 28, die an der einen langen Seitenwand 21 ausgebildet ist, entgegengesetzt zu den Leitschaufeln 25 der anderen Schaufelreihe 28, die an der anderen langen Seitenwand 22 ausgebildet sind, zur Axialrichtung 20 angestellt.

Zumindest bei den Ausführungsformen der Figuren 5-13 ist innerhalb wenigstens einer Schaufelreihe 28 eine Leitschaufel 25' erkennbar, die bezüglich der anderen Leitschaufeln 25 eine kleinere Schaufellänge aufweist.

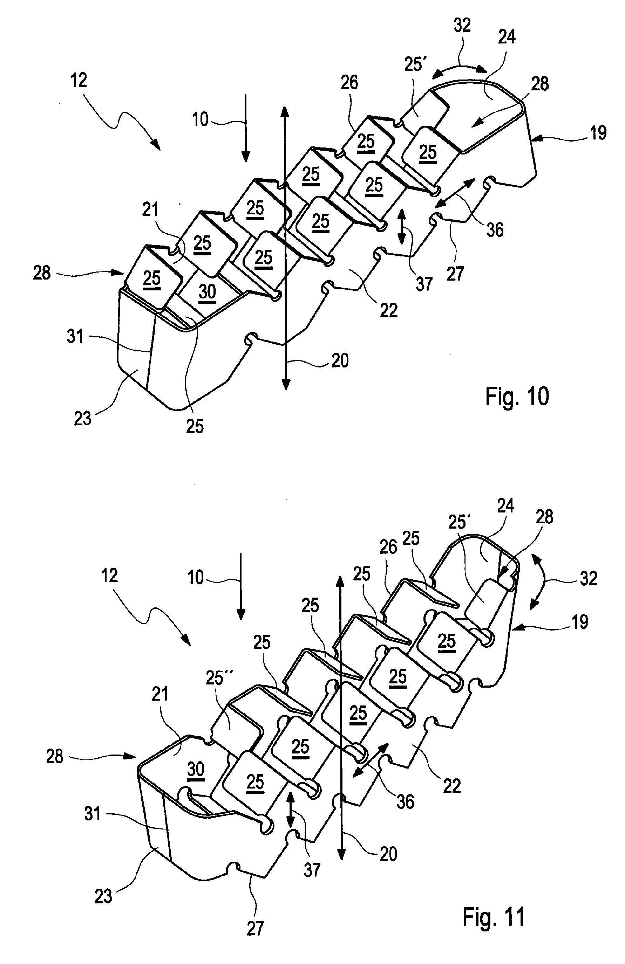

Figur 11 zeigt eine Ausführungsform, bei der innerhalb einer der Schaufelreihen 28 eine der Leitschaufeln 25" entgegengesetzt zu den übrigen Leitschaufeln 25 dieser Leitschaufelreihe 28 relativ zur Axialrichtung angestellt ist.

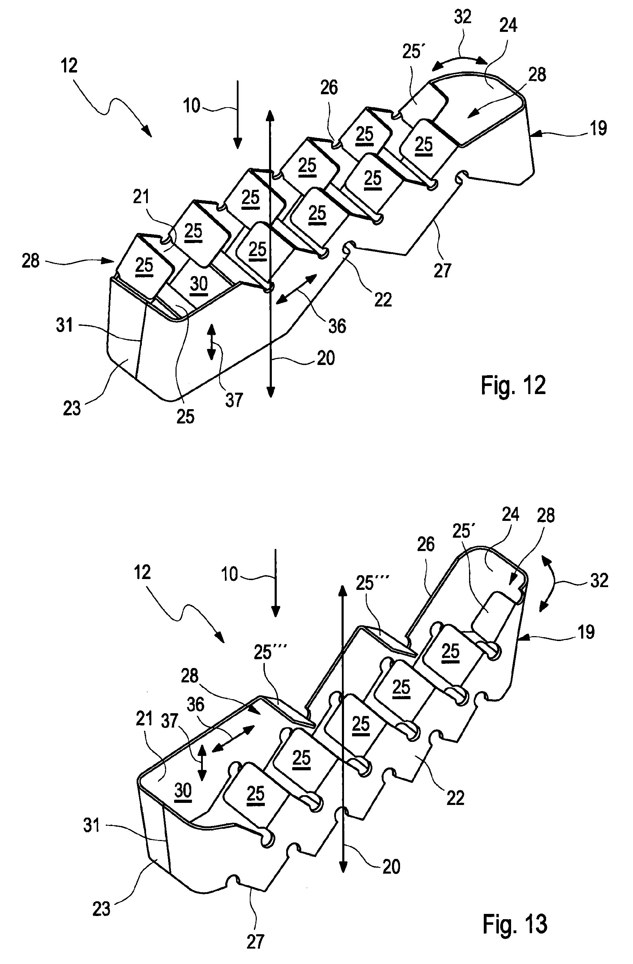

Die Figuren 12 und 13 zeigen Ausführungsformen, bei denen die Leitschaufeln 25 der einen Schaufelreihe 28 eine andere Schaufelbreite besitzen als die Leitschaufeln 25 der anderen Schaufelreihe 28. Exemplarisch sind in Figur 13 die anströmseitig an der einen langen Seitenwand 21 angeordneten Leitschaufeln 25'" etwa doppelt so breit wie die Leitschaufeln 25 der an der gegenüberliegenden langen Seitenwand 22 angeordneten Schaufelreihe 28.

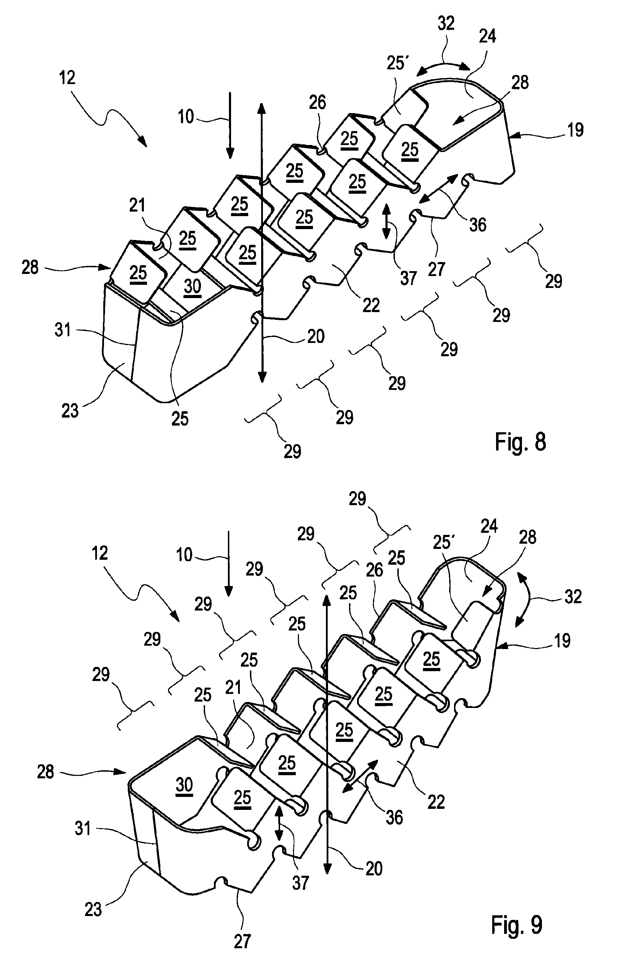

Die Figuren 8-13 zeigen außerdem eine Konfiguration, in welcher entlang der jeweiligen langen Seitenwand 21, 22 an dem jeweiligen axialen Ende 26, 27 quer zur Axialrichtung 20 mehrere Leitschaufelplätze 29 regelmäßig, also mit gleichmäßigen Abständen nebeneinander angeordnet sind. Während bei den Ausführungsformen der Figuren 4-7 die Anzahl der Leitschaufelplätze 29 mit der Anzahl der Leitschaufeln 25 übereinstimmt, so dass in jedem Leitschaufelplatz 29 eine Leitschaufel 25 angeordnet ist, fehlt bei den Ausführungsformen der Figuren 8-13 zumindest eine Leitschaufel 25, so dass in wenigstens einem solchen Leitschaufelplatz 29 eine Lücke 30 vorhanden ist.

Es ist klar, dass die hier anhand der einzelnen Ausführungsformen der Figuren 4-13 erläuterten Varianten grundsätzlich auch beliebig miteinander kombiniert werden können.

Im Beispiel ist der Tragkörper 19 ein Blechformteil aus einem flachen Bahnmaterial, das integral die vier Seitenwände 21, 22, 23, 24 umfasst. Ferner sind die Leitschaufeln 25 an der jeweiligen langen Seitenwand 21, 22 integral ausgeformt, so dass letztlich die komplette Einrichtung 12 aus einem einzigen Blechformteil hergestellt ist. Die Herstellung kann dabei aus einem langgestreckten streifen- oder bahnförmigen Blechrohling oder Bahnmaterialkörper erfolgen, bei dem zunächst die Leitschaufeln 25 freigeschnitten werden. Anschließend können die Leitschaufeln 25 abgewinkelt werden. Schließlich kann der Blechstreifen bzw. der Bahnmaterialkörper entsprechend dem flachen durchströmbaren Querschnitt der Einrichtung 12 gebogen werden, um die langen und kurzen Seitenwände 21, 22, 23, 24 des Tragkörpers 19 auszubilden. Die Längsenden des Rohlings können an der einen kurzen Seitenwand 23 entsprechend einer Verbindungsnaht 31 aneinander befestigt sein. Im umgeformten Zustand erstreckt sich das Bahnmaterial des Bahnmaterialkörpers mit seiner Längsrichtung 36 in der Umfangsrichtung 32 und bildet dabei die Seitenwände 21, 22, 23, 24 und verläuft mit seiner Querrichtung 37 parallel zur Axialrichtung 20.

## Patentansprüche

1. Misch- und/oder Verdampfungseinrichtung für eine Abgasanlage (5) einer Brennkraftmaschine (1),
- mit einem Tragkörper (19), der einen quer zur Axialrichtung (20) der Einrichtung (12) verlaufenden, flachen, durchströmbaren Querschnitt der Einrichtung (12) in der Umfangsrichtung (32) umschließt,
- wobei der Tragkörper (19) zwei einander gegenüberliegende lange Seitenwände (21, 22) und zwei einander gegenüberliegende kurze Seitenwände (23, 24) aufweist,
- wobei die kurzen Seitenwände (23, 24) jeweils die beiden langen Seitenwände (21, 22) miteinander verbinden,
- wobei zumindest an einer langen Seitenwand (21, 22) zumindest an einem axialen Ende (26, 27) mehrere Leitschaufeln (25) angeordnet sind, die in Richtung zur anderen langen Seitenwand (21, 22) abstehen und gegenüber der Axialrichtung (20) angestellt sind,
**dadurch gekennzeichnet,**
**dass** zumindest zwei Leitschaufeln (25), die an derselben Seitenwand (21, 22) und an demselben axialen Ende (26, 27) angeordnet sind, unterschiedliche Schaufellängen und/oder unterschiedliche Schaufelbreiten aufweisen und/oder verschieden zur Axialrichtung (20) oder entgegengesetzt zueinander relativ zur Axialrichtung (20) angestellt sind.

2. Einrichtung nach Anspruch 1,
**dadurch gekennzeichnet,**
**dass** die Leitschaufeln (25) von der jeweiligen Seitenwand (21, 22) im Wesentlichen senkrecht abstehen.

3. Einrichtung nach Anspruch 1 oder 2,
**dadurch gekennzeichnet,**
**dass** der Tragkörper (19) aus einem flachen Bahnmaterial durch Umformung hergestellt ist, das sich mit seiner Längsrichtung (36) in der Umfangsrichtung (32) erstreckt und die Seitenwände (21, 22, 23, 24) bildet und mit seiner Querrichtung (37) parallel zur Axialrichtung (20) verläuft.

4. Einrichtung nach Anspruch 3,
**dadurch gekennzeichnet,**
**dass** die Leitschaufeln (25) integral am Bahnmaterial ausgeformt und davon abgewinkelt sind.

5. Einrichtung nach einem der Ansprüche 1 bis 4,
**dadurch gekennzeichnet,**
**dass** im flachen Querschnitt ein erster Durchmesser (33), der sich senkrecht zur Axialrichtung (20) erstreckt, mindestens doppelt so groß ist wie ein zweiter Durchmesser (34), der sich senkrecht zur Axialrichtung (20) und senkrecht zum ersten Durchmesser (33) erstreckt.

6. Einrichtung nach einem der Ansprüche 1 bis 5,
**dadurch gekennzeichnet,**
**dass** die Leitschaufeln (25) an der jeweiligen Seitenwand (21, 22) an einer Anströmseite (26) oder an einer Abströmseite (27) oder sowohl an einer Anströmseite (26) als auch an einer Abströmseite (27) angeordnet sind.

7. Einrichtung nach einem der Ansprüche 1 bis 6,
**dadurch gekennzeichnet,**
**dass** die Leitschaufeln (25) an beiden langen Seitenwänden (21, 22) jeweils an wenigstens einem axialen Ende (26, 27) angeordnet sind.

8. Einrichtung nach einem der Ansprüche 1 bis 7,
**dadurch gekennzeichnet,**
**dass** die Leitschaufeln (25) an beiden langen Seitenwänden (21, 22) jeweils an wenigstens einem axialen Ende (26, 27) angeordnet sind und sich jeweils bis zu einer Längsmittelebene erstrecken, die mittig zwischen den langen Seitenwänden (21, 22) verläuft.

9. Einrichtung nach einem der Ansprüche 1 bis 8,
**dadurch gekennzeichnet,**
**dass** die Leitschaufeln (25) jeweils freistehend enden.

10. Einrichtung nach einem der Ansprüche 1 bis 9,
**dadurch gekennzeichnet,**
**dass** die Leitschaufeln (25), die an verschiedenen axialen Enden (26, 27) angeordnet sind, entgegengesetzt zur Axialrichtung (20) angestellt sind.

11. Einrichtung nach einem der Ansprüche 1 bis 10,
**dadurch gekennzeichnet,**
**dass** die Leitschaufeln (25), die an demselben axialen Ende (26, 27) an gegenüberliegenden langen Seitenwänden (21, 22) angeordnet sind, entgegengesetzt zur Axialrichtung (20) angestellt sind.

12. Einrichtung nach einem der Ansprüche 1 bis 11,
**dadurch gekennzeichnet,**
**dass** entlang der jeweiligen langen Seitenwand (21, 22) an dem jeweiligen axialen Ende (26, 27) quer zur Axialrichtung (20) mehrere Leitschaufelplätze (29) regelmäßig nebeneinander angeordnet sind, wobei die Anzahl der Leitschaufeln (25), die jeweils in einem solchen Leitschaufelplatz (29) angeordnet sind, kleiner ist als die Anzahl der Leitschaufelplätze (29), so dass zumindest in einem solchen Leitschaufelplatz (29) eine Lücke (30) angeordnet ist.

13. Einrichtung nach einem der Ansprüche 1 bis 12,
**dadurch gekennzeichnet,**
- **dass** alle Leitschaufeln (25) integral an der jeweiligen langen Seitenwand (21, 22) ausgeformt sind, und/oder
- **dass** alle Seitenwände (21, 22, 23, 24) integral am Tragkörper (19) ausgeformt sind, und/oder
- **dass** alle Seitenwände (21, 22, 23, 24) und alle Leitschaufeln (25) aus einem einzigen Bahnmaterialkörper durch Umformung hergestellt sind.

14. Abgasanlage für eine Brennkraftmaschine (1),
- mit wenigstens einem SCR-Katalysator (6),
- mit einer Reduktionsmittelzuführeinrichtung (8), die zumindest einen Injektor (9) zum Zuführen eines Reduktionsmittels zum Abgasstrom (10) stromauf des SCR-Katalysators (6) aufweist,
- mit wenigstens einer Misch- und/oder Verdampfungseinrichtung (12) nach einem der Ansprüche 1 bis 13, die zwischen dem wenigstens einen Injektor (9) und dem wenigstens einen SCR-Katalysator (6) angeordnet ist.

15. SCR-Katalysator für eine Abgasanlage (5) einer Brennkraftmaschine (1),
- mit einem Gehäuse (15), in dem zumindest ein SCR-Katalysatorelement (16) angeordnet ist,
- mit mindestens einer Misch- und/oder Verdampfungseinrichtung (12) nach einem der Ansprüche 1 bis 13, die im Gehäuse (15) stromauf des wenigstens einen SCR-Katalysatorelements (16) angeordnet ist.

## Claims

1. A mixing and/or evaporating device for an exhaust system (5) of an internal combustion engine (1),
- with a support body (19), which encloses a flat cross section of the device (12) in the circumferential direction (32) through which a flow can flow and runs transversely to the axial direction (20) of the device (12),
- wherein the support body (19) comprises two long side walls (21, 22) located opposite one another and two short side walls (23, 24) located opposite one another,
- wherein the short side walls (23, 24) each connect the two long side walls (21, 22) to one another,
- wherein at least on a long side wall (21, 22) at least at an axial end (26, 27) multiple guide blades (25) are arranged, which project in the direction of the other long side wall (21, 22) and are set relative to the axial direction (20),
**characterized in that** at least two guide blades (25) which are arranged on the same side wall (21, 22) and at the same axial end (26, 27) have different blade lengths and/or different blade widths and/or are set differently relative to the axial direction (20) or opposite to one another relative to the axial direction (20).

2. The device according to Claim 1, **characterized in that** the guide blades (25) project substantially perpendicularly from the respective side wall (21, 22).

3. The device according to Claim 1 or 2, **characterized in that** the support body (19) is produced from a flat web material through forming, which with its longitudinal direction (36) extends in the circumferential direction (32) and forms the side walls (21, 22, 23, 24) and with its transverse direction (37) runs parallel to the axial direction (20).

4. The device according to Claim 3, **characterized in that** the guide blades (25) are integrally formed on the web material and are angled from there.

5. The device according to any one of the Claims 1 to 4, **characterized in that** in the flat cross section a first diameter (33), which extends perpendicularly to the axial direction (20), is at least twice as large as a second diameter (34), which extends perpendicularly to the axial direction (20) and perpendicularly to the first diameter (33).

6. The device according to any one of the Claims 1 to 5, **characterized in that** the guide blades (25) are arranged on the respective side wall (21, 22) on an onflow side (26) or an outflow side (27) or both on an onflow side (26) and also on an outflow side (27).

7. The device according to any one of the Claims 1 to 6, **characterized in that** the guide blades (25) are arranged on both long side walls (21, 22) on at least one axial end (26, 27)each.

8. The device according to any one of the Claims 1 to 7, **characterized in that** the guide blades (25) are each arranged on both long side walls (21, 22) on at least one axial end (26, 27) and each extend as far as to a longitudinal centre plane which runs in the middle between the long side walls (21, 22).

9. The device according to any one of the Claims 1 to 8, **characterized in that** the guide blades (25) each end in a freestanding manner.

10. The device according to any one of the Claims 1 to 9, **characterized in that** the guide blades (25), which are arranged on different axial ends (26, 27), are set opposite to the axial direction (20).

11. The device according to any one of the Claims 1 to 10, **characterized in that** the guide blades (25) which are arranged on the same axial end (26, 27) on long side walls (21, 22) located opposite, are set opposite to the axial direction (20).

12. The device according to any one of the Claims 1 to 11, **characterized in that** along the respective long side wall (21, 22) on the respective axial end (26, 27) transversely to the axial direction (20) multiple guide blade slots (29) are regularly arranged next to one another, wherein the number of the guide blades (25), which are each arranged in such a guide blade slot (29), is smaller than the number of the guide blade slots (29), so that a gap (30) is arranged in at least one such guide blade slot (29).

13. The device according to any one of the Claims 1 to 12, **characterized**
- **in that** all guide blades (25) are integrally formed on the respective long side wall (21, 22), and/or
- **in that** all side walls (21, 22, 23, 24) are integrally formed on the support body (19), and/or
- **in that** all side walls (21, 22, 23, 24) and all guide blades (25) are produced from a single web material body through forming.

14. An exhaust system for an internal combustion engine (1),
- with at least one SCR-catalytic converter (6),
- with a reduction agent feeding device (8), which comprises at least one injector (9) for feeding a reduction agent to the exhaust gas flow (10) upstream of the SCR-catalytic converter (6),
- with at least one mixing and/or evaporating device (12) according to any one of the Claims 1 to 13, which is arranged between the at least one injector (9) and the at least one SCR-catalytic converter (6).

15. The SCR-catalytic converter for an exhaust system (5) of an internal combustion engine (1),
- with a housing (15), in which at least one SCR-catalytic converter element (16) is arranged,
- with at least one mixing and/or evaporating device (12) according to any one of the Claims 1 to 13, which is arranged in the housing (15) upstream of the at least one SCR-catalytic converter element (16).

## Revendications

1. Dispositif de mélange et/ou d'évaporation pour un système de gaz d'échappement (5) d'un moteur à combustion interne (1),
- comprenant un support (19) qui entoure une section d'un dispositif (12) dans le sens périphérique (32) pouvant être traversée, plate et transversale au sens axial (20) du dispositif (12),
- dans lequel le support (19) présente deux parois latérales longues (21, 22) qui se font face et deux parois latérales courtes (23, 24) qui se font face,
- dans lequel les parois latérales courtes (23, 24) relient respectivement les deux parois latérales longues (21, 22) entre elles,
- dans lequel plusieurs aubes directrices (25) sont disposées au moins sur une paroi latérale longue (21, 22) au moins sur une extrémité axiale (26, 27), lesquelles s'éloignent en direction de l'autre paroi latérale longue (21, 22) et sont placées de façon opposée au sens axial (20),
**caractérisé en ce**
**qu'**au moins deux aubes directrices (25) qui sont disposées sur la même paroi latérale (21, 22) et la même extrémité axiale (26, 27), présentent des longueurs et/ou des largeurs d'aube directrice différentes et/ou sont placées autrement que dans le sens axial (20) ou opposées l'une à l'autre par rapport au sens axial (20).

2. Dispositif selon la revendication 1, **caractérisé en ce que** les aubes directrices (25) s'éloignent essentiellement verticalement de la paroi latérale (21, 22) respective.

3. Dispositif selon la revendication 1 ou 2, **caractérisé en ce que** le support (19) est fabriqué dans un matériau en bande plat par déformation, qui s'étend dans le sens périphérique (32) par son sens longitudinal (36) et forme les parois latérales (21, 22, 23, 24) et est parallèle au sens axial (20) par son sens transversal (37).

4. Dispositif selon la revendication 3, **caractérisé en ce que** les aubes directrices (25) sont formées intégralement sur le matériau en bande et coudées à partir de celui-ci.

5. Dispositif selon l'une des revendications 1 à 4, **caractérisé en ce qu'**un premier diamètre (33) vertical au sens axial (20) s'étend dans la section transversale plate, lequel fait au moins deux fois un second diamètre (34) vertical au sens axial (20) et vertical au premier diamètre (33).

6. Dispositif selon l'une des revendications 1 à 5, **caractérisé en ce que** les aubes directrices (25) sur la paroi latérale (21, 22) respective, sont disposées sur un côté d'amenée (26) ou sur un côté d'évacuation (27) ou aussi bien sur un côté d'amenée (26) que sur un côté d'évacuation (27).

7. Dispositif selon l'une des revendications 1 à 6, **caractérisé en ce que** les aubes directrices (25) sur les deux parois latérales longues (21, 22) sont disposées respectivement sur au moins une extrémité axiale (26, 27).

8. Dispositif selon l'une des revendications 1 à 7, **caractérisé en ce que** les aubes directrices (25) sur les deux parois latérales longues (21, 22) sont disposées respectivement sur au moins une extrémité axiale (26, 27) et s'étendent toutes deux jusqu'à un plan médian longitudinal qui est au centre entre les parois latérales longues (21, 22).

9. Dispositif selon l'une des revendications 1 à 8, **caractérisé en ce que** les aubes directrices (25) terminent chacune librement.

10. Dispositif selon l'une des revendications 1 à 9, **caractérisé en ce que** les aubes directrices (25), qui sont disposées sur différentes extrémités axiales (26, 27), sont opposées au sens axial (20).

11. Dispositif selon l'une des revendications 1 à 10, **caractérisé en ce que** les aubes directrices (25), qui sont disposées sur la même extrémité axiale (26, 27) sur des parois latérales longues (21, 22) qui se font face, sont opposées au sens axial (20).

12. Dispositif selon l'une des revendications 1 à 11, **caractérisé en ce que** plusieurs emplacements d'aubes directrices (29) sont disposés régulièrement les uns à côté des autres le long de la paroi latérale longue respective (21, 22) sur l'extrémité axiale (26, 27) respective transversalement au sens axial (20), sachant que le nombre d'aubes directrices (25) qui sont respectivement disposées dans un tel emplacement d'aube directrice (29) est inférieur au nombre d'emplacements d'aube directrice (29), de sorte qu'au moins un trou (30) est disposé dans un tel emplacement d'aube directrice (29).

13. Dispositif selon l'une des revendications 1 à 12, **caractérisé en ce**
- **que** toutes les aubes directrices (25) sont formées intégralement sur la paroi latérale longue (21, 22) respective et/ou
- **que** toutes les parois latérales (21, 22, 23, 24) sont formées intégralement sur le support (19), et/ou
- **que** toutes les parois latérales (21, 22, 23, 24) et toutes les aubes directrices (25) sont fabriquées par déformation dans un même corps de matériau en bande.

14. Système de gaz d'échappement pour un moteur à combustion interne (1), comprenant
- au moins un catalyseur SCR (6),
- un dispositif d'alimentation en agents réducteurs (8) qui présente au moins un injecteur (9) pour alimenter un agent réducteur vers un flux de gaz d'échappement (10) en amont du catalyseur SCR (6),
- au moins un dispositif de mélange et/ou de vaporisation (12) selon l'une des revendications 1 à 13, qui est disposé entre l'au moins un injecteur (9) et l'au moins un catalyseur SCR (6).

15. Catalyseur SCR pour un système de gaz d'échappement (5) d'un moteur à combustion interne (1), comprenant
- un carter (15) dans lequel au moins un élément de catalyseur SCR (16) est intégré,
- au moins un dispositif de mélange et/ou de vaporisation (12) selon l'une des revendications 1 à 13, qui est disposé dans le carter (15) en amont de l' au moins un élément de catalyseur SCR (16).
